Europäisches Patentamt

(19) European Patent Office

Office européen des brevets

(11) Veröffentlichungsnummer: **0 025 815**
**B1**

(12) **EUROPÄISCHE PATENTSCHRIFT**

(45) Veröffentlichungstag der Patentschrift:
**22.08.84**

(51) Int. Cl.³: **G 01 B 11/16,** G 01 M 11/00,
G 01 N 19/08, G 08 B 21/00

(21) Anmeldenummer: **80102199.9**

(22) Anmeldetag: **24.04.80**

(54) **Verfahren zur Dehnungs-Überwachung von auf Zug beanspruchten Bauteilen.**

(30) Priorität: **19.09.79 DE 2937824**

(43) Veröffentlichungstag der Anmeldung:
**01.04.81 Patentblatt 81/13**

(45) Bekanntmachung des Hinweises auf die Patenterteilung:
**22.08.84 Patentblatt 84/34**

(84) Benannte Vertragsstaaten:
**FR GB NL SE**

(56) Entgegenhaltungen:
**DE - A - 2 800 124**
**DE - A - 2 842 077**
**GB - A - 1 544 483**
**US - A - 3 714 644**
**US - A - 4 012 149**
**US - A - 4 135 386**
**US - A - 4 174 149**

(73) Patentinhaber: **Philips Kommunikations Industrie AG,
Thurn-und-Taxis-Strasse 10, D-8500 Nürnberg 10 (DE)**

(72) Erfinder: **Ditscheid, Hans Leo, Dipl.-Ing., Am
Birkenbusch 1, D-5060 Bergisch Gladbach 3 (DE)**

(74) Vertreter: **Patentanwälte Dr. Solf & Zapf,
Schlossbleiche 20 Postfach 13 02 19,
D-5600 Wuppertal 1 (DE)**

## Beschreibung

Die Erfindung betrifft ein Verfahren zur Dehnungs-Überwachung von auf Zug beanspruchten Bauteilen mit den auf Dehnung beanspruchten Zonen der Bauteile kraftschlüssig befestigten Lichtleitfasern, deren Lichtleitung laufend oder in Zeitabständen überwacht wird.

In vielen Gebieten der Technik, beispielsweise im Flugzeugbau, bei Betonkonstruktionen, in Brücken, Krananlagen, Atomreaktoren, Kraftwerken, Chemieanlagen, gibt es eine grosse Anzahl von Bauteilen, wie Spann- und Tragseile, Rohrleitungen usw., bei denen die Gefahr des Materialbruchs besteht und ein Bruch schwere Folgen nach sich ziehen kann.

Bekannt ist eine Anordnung mit einer kraftschlüssigen Verbindung zwischen jeweils einem auf Krafteinwirkung, beispielsweise durch eine Last, zu überwachenden Element und einer Lichtleitfaser. Als Messgrösse dient hierbei eine Veränderung der Polarisation des von der Lichtleitfaser geleiteten Lichts nach Massgabe einer Änderung der Gefügespannung in der Faser. Eine zum Bruch der Lichtleitfaser und damit zur Unterbrechung der Lichtleitung führende Sprödigkeit wird bei der bekannten Anordnung nicht genutzt. Bei dieser erfolgt dementsprechend ebenfalls keine Reihenschaltung der Lichtleitfaserstrecken, die den zu überwachenden Bauteilen zugeordnet sind, vielmehr sind diese bei Anordnung mehrerer Lichtleitfaserstrecken parallel geschaltet, was eine entsprechende Vielzahl von Anzeige- und/oder Schalteinrichtungen erfordert, was angesichts der relativ aufwendigen Einrichtungen einen aussergewöhnlich hohen Aufwand verursacht (GB-A-1 544 483).

Bekannt ist ferner eine Anordnung zur Einbruchsicherung mit einer Sperrkette, deren gewaltsame Zerstörung durch eine mit der Kette parallel verlaufende Lichtleitfaser überwacht wird. Dabei ist jedoch eine gegenseitige Verbindung zwischen Kette und Lichtleitfaser weder erforderlich noch vorgesehen, vielmehr wird durch die Anordnung der bekannten Einrichtung lediglich erreicht, dass zwangsläufig beim Durchtrennen der Sperrkette ebenfalls die Lichtleitfaser mit durchtrennt wird. Hierbei findet eine Dehnungs-Überwachung von auf Zug beanspruchten Bauteilen nicht statt, weshalb beispielsweise anstelle der Lichtleitfaser zur Signalisierung einer Durchtrennung der Sperrkette ebensogut auch ein elektrischer Leiter beliebiger Art verwendet werden kann, der in oder mit der Kette parallel verläuft (US-A-3 714 644).

Der Erfindung liegt die Aufgabe zugrunde, ein Verfahren der eingangs genannten Art zur Dehnungs-Überwachung von auf Zug beanspruchten Bauteilen anzugeben, das es in unkomplizierter Weise und mit einem Minimum an Aufwand ermöglicht, mehrere bruchgefährdete Zonen einer Vielzahl von Bauteilen gleichzeitig permanent oder in kurzen Zeitabständen zu überwachen, sowie einen eingetretenen Bruch zu melden und gleichzeitig zu lokalisieren.

Die Lösung der Aufgabe erfolgt erfindungsgemäss dadurch, dass die Lichtleitfasern einer Vielzahl von Bauteilen fortlaufend hintereinander miteinander verbunden werden und anhand der Feststellung eines Bruchs in einer der Lichtleitfasern der Bauteile mit einem Lichtreflektometer eine Ortung einer bruchgefährdeten Zone eines Bauteils durchgeführt wird.

Die mit der Erfindung erzielbaren Vorteile bestehen insbesondere darin, dass eine fast unbegrenzte Zahl von Bauteilen damit ständig überwacht werden kann und im Schadensfall eine Bruchstelle schnellstens festgestellt, deren Lage im überwachten System lokalisiert, und daraufhin situationsgerechte Massnahmen eingeleitet werden können, und dies insbesondere rechtzeitig vor einer fortschreitend endgültigen Zerstörung des überwachten Bauteils. Dabei betragen die Kosten des erfindungsgemässen Verfahrens nur einen Bruchteil der bisher notwendigen und üblicherweise unumgänglichen Kosten für die Prüfung, den Nutzungsausfall und eventuelle Schadensregulierungen. Gewicht und Raumbedarf der LLF und des Prüfgerätes sind so gering, dass das Verfahren mit geringem Aufwand beispielsweise auch an Bord von Flugzeugen während des Fluges genutzt werden kann.

Ein Ausführungsbeispiel der Erfindung ist in der Zeichnung aus Gründen der Vereinfachung nur für ein einziges Bauteil dargestellt und wird im folgenden näher beschrieben.

Es zeigen:

Fig. 1 ein Bauteil in zwei Ansichten,

Fig. 2 das Bauteil im Schnitt,

Fig. 3 ein ähnliches Bauteil im Querschnitt.

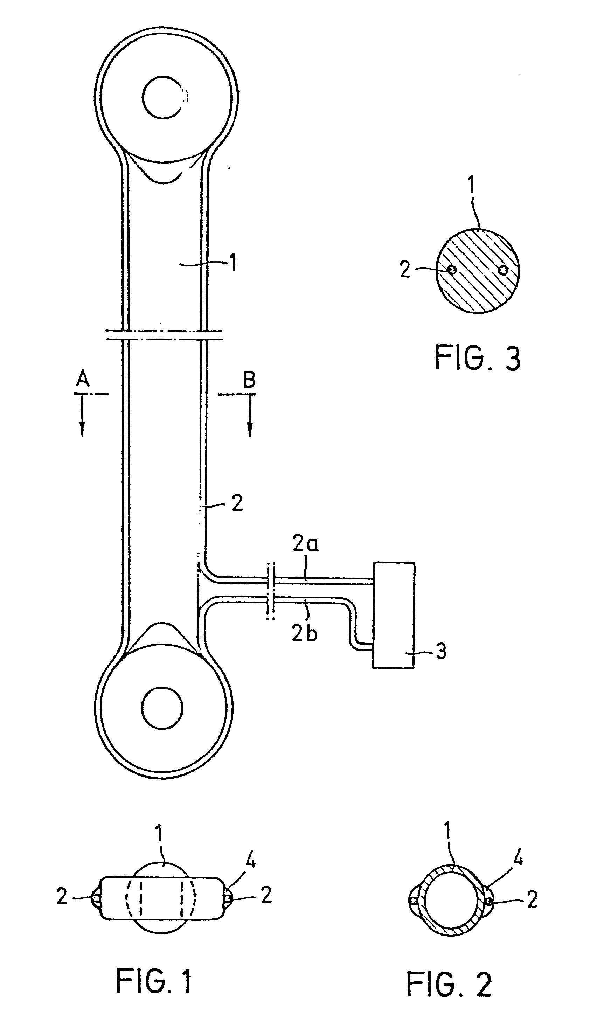

In Fig. 1 ist als Anwendungsbeispiel eine Stange 1 schematisch dargestellt, wie sie für die Lenkung von Fahrzeugen, als Fahrwerksstrebe oder Steuerorgan in Luftfahrzeugen in ähnlicher Form verwendet wird. Auf der Oberfläche der Stange 1 ist eine Lichtleitfaser (LLF) 2 mit frei liegendem Anfang 2a und frei liegendem Ende 2b befestigt, die praktisch alle bruchgefährdeten Zonen der Zugstange 1 abdeckt. Die kraftschlüssige Befestigung der LLF 2 an der Zugstange 1 kann mit einem aushärtbaren Kunststoffkleber 4 erfolgen. Anfang 2a oder Ende 2b der LLF sind zur Festlegung einer Faser-Unterbrechung sowie zur Ortung der Faser-Bruchstelle mit einem Licht-Reflektometer 3 ausgestattet. Im Falle einer Unterbrechung in der Lichtleitstrecke würde das Licht-Reflektometer sowohl deren spontane Verkürzung als auch zugleich damit den Ort des Bruchs der Lichtleitfaser signalisieren.

Derartige Geräte arbeiten mit Licht-Impulsen, deren zeitliche Aufeinanderfolge dem Verwendungszweck angepasst werden kann. Es ist beispielsweise denkbar, nur vor jedem Start des betreffenden Fahrzeuges eine kurze Licht-Impulsreihe abzugeben und damit die Unversehrtheit aller Bauteile, deren LLF 2 in Reihe geschaltet sind, festzustellen. Bei längeren Fahrten oder Flügen ist es denkbar, in relativ kurzen Zeitabständen, beispielsweise alle Viertelstunde, eine solche Prüfung durchzuführen.

In der Fig. 2 ist die Zugstange 1 bei A–B im Querschnitt dargestellt. Erkennbar ist hier die Befestigung der LLF 2 mit dem gehärteten Kunststoffkleber 4.

In der Fig. 3 ist eine Anordnung der LLF 2 in einem zur Zugstange 1 ähnlichen Bauteil im Schnitt dargestellt. Diese Anordnung der LLF 2 ist besonders einfach in Bauteilen aus Kunststoff oder aber aus Beton zu realisieren.

Ähnliche Anordnungen lassen sich zweckentsprechend für alle möglichen Bauteile unter Benutzung des dargestellten Grundgedankens finden. Bei zweckmässiger Anordnung der herausgeführten Enden 2a und 2b der LLF 2, beispielsweise über drehbare Stecker, können auch sich drehende Teile, wie Schiffs- oder Turbinenwellen, Kurbelwellen oder Achsen auf Dehnung als Indiz für eine akute Bruchgefährdung hin überwacht werden.

Dabei ist es auch denkbar, die laufenden Entfernungsangaben des Licht-Reflektometers direkt in einen festprogrammierten Rechner einzugeben, auf dessen Sichtgerät das zum Ort der Bruchgefährdung oder des eingetretenen Bruchs gehörende Bauteil angegeben werden kann.

## Patentanspruch

Verfahren zur Dehnungs-Überwachung von auf Zug beanspruchten Bauteilen mit in den auf Dehnung beanspruchten Zonen der Bauteile kraftschlüssig befestigten Lichtleitfasern, deren Lichtleitung laufend oder in Zeitabständen überwacht wird, dadurch gekennzeichnet, dass die Lichtleitfasern einer Vielzahl von Bauteilen fortlaufend hintereinander miteinander verbunden werden und anhand der Feststellung eines Bruchs in einer der Lichtleitfasern der Bauteile mit einem Lichtreflektometer eine Ortung einer bruchgefährdeten Zone eines Bauteils durchgeführt wird.

## Claim

A method for monitoring extension in stressed components, utilizing optical fibres which are fixed to the stressed zones of the components and whose conduction of light is continuously or intermittently monitored, characterized in that the optical fibres of a plurality of components are connected in series and in that upon detection of a rupture in one of the optical fibres of the components the location of a component zone where a fracture is liable to occur is determined by means of a light reflectometer.

## Revendication

Procédé pour surveiller l'extension d'éléments soumis à tension suivant lequel on utilise des fibres optiques solidaires des zones d'éléments soumises à l'allongement, fibres optiques dont le guidage de lumière est surveillé de façon continue ou périodiquement, caractérisé en ce que les fibres optiques de plusieurs éléments sont successivement interconnectées et en ce que lors de la détection d'une rupture dans l'une des fibres optique des éléments, on localise au moyen d'un réflectomètre une zone d'élément qui risque de se rompre.

FIG. 3

FIG. 1

FIG. 2